# EUROPÄISCHE PATENTSCHRIFT

(11) **EP 0 996 641 B1**
(45) Veröffentlichungstag und Bekanntmachung des Hinweises auf die Patenterteilung: **27.06.2001**
(21) Anmeldenummer: 98940105.4
(22) Anmeldetag: 01.07.1998
(51) Int. Cl.: C08B 11/00

(54) **NEUARTIGE CELLULOSEETHER UND VERFAHREN ZU DEREN HERSTELLUNG**
NOVEL CELLULOSE ETHERS AND METHOD FOR PRODUCING THE SAME
NOUVEAUX ETHERS DE CELLULOSE ET PROCEDE PERMETTANT DE LES PREPARER

(30) Priorität: 14.07.1997 DE 19730090
(43) Veröffentlichungstag der Anmeldung: 03.05.2000
(73) Patentinhaber: Wolff Walsrode AG, 29655 Walsrode (DE)
(72) Erfinder: KLOHR, Erik-Andreas, D-29664 Walsrode (DE); NEUBAUER, Jörg, D-29664 Walsrode (DE); KOCH, Wolfgang, D-29699 Bomlitz (DE); SZABLIKOWSKI, Klaus, D-29664 Walsrode (DE); REDEKER, Detmar, D-29664 Walsrode (DE); WAGENKNECHT, Wolfgang, D-14513 Teltow (DE); LOTH, Fritz, D-14513 Teltow (DE)
(74) Vertreter: Pettrich, Klaus-Günter, Dr.
(86) Internationale Anmeldenummer: EP9804061
(87) Internationale Veröffentlichungsnummer: WO9903891

(56) Entgegenhaltungen:
- DD-A- 207 380
- PATENT ABSTRACTS OF JAPAN vol. 11, no. 332 (C-455), 20. Oktober 1987 & JP 62 116601 A (ASAHI CHEM IND CO LTD), 28. Mai 1987
- PATENT ABSTRACTS OF JAPAN vol. 9, no. 237 (C-305), 24. September 1985 & JP 60 094401 A (ASAHI KASEI KOGYO KK), 27. Mai 1985
- PATENT ABSTRACTS OF JAPAN vol. 9, no. 104 (C-279), 8. Mai 1985 & JP 59 230001 A (KOJIN KK), 24. Dezember 1984

## Beschreibung

Die Erfindung betrifft neuartige Celluloseether und ein Verfahren zu deren Herstellung durch Umsetzung von in N-Methylmorpholin-N-oxid-Monohydrat (NMMNO) gelöster Cellulose mit Alkylierungsreagenzien unter homogenen Reaktionsbedingungen. Die nach diesem Verfahren hergestellten Produkte zeichnen sich durch ein spezielles Substitutionsmuster und neuartige Eigenschaften aus.

Die technische Herstellung von Celluloseethern erfolgt heute ausschließlich unter heterogenen Reaktionsbedingungen, wobei Cellulose zunächst mit konzentrierter Alkalilauge aktiviert und dann mit Alkylhalogeniden oder Epoxyalkylverbindungen bei erhöhter Temperatur umgesetzt wird. Die Aktivierung ist erforderlich um einerseits die partiell kristalline Struktur der Cellulose aufzulockern und die Zugänglichkeit der Hydroxylgruppen zu erhöhen und andererseits die Hydroxylgruppen der Cellulose soweit zu polarisieren, daß eine nucleophile Substitution des Halogens am Alkylhalogenid oder eine Ringöffnung bei den Epoxiden mit anschließender Addition möglich wird. Zur Verbesserung der Gleichmäßigkeit der Substituentenverteilung und damit einer Verbesserung der Produkteigenschaften wird die Umsetzung oft in Gegenwart inerter organischer Lösungsmittel, wie z. B. 2-Propanol, durchgeführt.

Nachteile der über den gesamten Prozeß heterogenen Reaktionsführung bestehen darin, daß
1) eine hohe Alkalikonzentration zur Quellung und Aktivierung der Cellulose auch bei Reaktionen, die nur katalytische Mengen erfordern, notwendig ist,
2) dadurch ein Molekulargewichtsabbau und eine hohe Salzfracht bei Neutralisation der Lauge unvermeidlich ist,
3) keine vollständig löslichen und trotzdem hochviskosen Celluloseether bei geringen Substitutionsgraden herstellbar sind,
4) infolge des weitgehenden Erhalts der morphologischen Struktur der Cellulose keine befriedigende gleichmäßige Veretherung entlang und zwischen den Polymerketten erreicht werden kann und auch bei löslichen höhersubstituierten Produkten stets unsubstituierten Monomereiheiten neben di- und trisubstituierte Anhydroglucoseeinheiten auftreten,
5) Löslichkeitseigenschaften, Temperaturstabilität oder Verträglichkeit der Celluloseether gegenüber ionischen oder nichtionischen Substanzen nieder- oder hochmolekularer Natur häufig unbefriedigend sind und die Anwendungsbereiche einschränken,
6) eine regioselektive homogene Derivatisierung von freien OH-Gruppen in bestimmten Positionen der Anhydroglucoseeinheit nicht möglich ist.

Zur Überwindung solcher durch die Heterogensynthese bedingter Nachteile wurden in den letzten Jahrzehnten verschiedene wäßrige und nichtwäßrige Celluloselösemittelsysteme zur Veretherung von Cellulose in homogener Phase genutzt. Damit sollte neben einer gleichmäßigeren Substituentenverteilung zugleich auch der Zugang zu löslichen Celluloseethern mit längerkettigen und voluminösen Substituenten eröffnet werden. Als Lösungsmittelsysteme, die unter den erforderlichen Reaktionsbedingungen genügend stabil und gegenüber den einzusetzenden Reagenzien auch inert sind, wurden vor allem quartäre Ammoniumbasen (US-PS 2087549), Mischungen aus Schwefeldioxid/Dimethylamin/Dimethylsulfoxid (A. Isogai, A.Ishizu, J. Nakano: J. Appl. Polymer. Sci. 31(1986) S. 341-352), Mischungen aus Dimethylsulfoxid/Paraformaldehyd (US-PS 4024335), Mischungen aus N,N-Dimethylacetamid/Lithiumchlorid (US-PS 4278790) und N-Methylmorpholin-N-oxid (NMMNO) vorgeschlagen (Übersichten in: Methoden der Organischen Chemie (Houben-Weyl), Bd. E 20 - Makromolekulare Stoffe, Hrg.: H. Bartel und J. Falbe, Georg Thieme Verl., Stuttgart-New York, 1987, S. 2086-2093 und B. Philipp, B. Lukanoff, H. Schleicher, W. Wagenknecht: Z. Chem. 26(1986)2, S. 50-58).

Diese Celluloselösemittelsysteme konnten sich bisher im technischen Maßstab z.T. wegen der begrenzten Lösekraft, insbesondere gegenüber hochmolekularen Ausgangscellulosen und höheren Cellulosekonzentrationen, der schwierigen Wiedergewinnung der Komponenten oder aus Kostengründen trotz der breiten Derivatisierungsmöglichkeiten nicht durchsetzen.

Als aussichtsreichstes Cellulose-Lösungsmittel für eine technische Anwendung hat sich in jüngster Zeit NMMNO erwiesen, wobei jedoch nahezu ausschließlich die Verformung von Cellulose zu Fasern und Folien kommerzielles Interesse gewonnen hat (US-PS 3447956, US-PS 4196282, EP 452610, WO 95/11261).

Homogene Veretherungen von Cellulose in Schmelzlösungen cyclischer Aminoxide, insbesondere von NMMNO, in Gegenwart von organischen Lösungsmitteln, vorzugsweise von DMSO, als Verdünnungsmittel zu Cyanethylcellulose oder Celluloseoxyethylmethylketon unter Verwendung der Vinylverbindungen Acrylnitril bzw. Methylvinylketon wurden erstmals von Johnson (US-PS 3447939) beschrieben, wobei nachteiligerweise bei sehr geringen Cellulosekonzentrationen, äußerst hohen Reagenzeinsatzmengen und hohen Reaktionstemperaturen, die die Zersetzung des N-oxids begünstigen, gearbeitet wurde. Im Falle der Cyanethylierung wird der Einsatz von Benzyltrimethylammoniumhydroxid als Veretherungskatalysator erwähnt. Bei allen hier angeführten Umsetzungen wurden zunächst stark verfärbte Cellulosederivatlösungen erhalten. Die Reagenzausbeuten waren äußerst gering und die resultierenden Cellulosederivate mehr oder weniger stark abgebaut, weshalb dieses Verfahrensprinzip und die hierbei erhaltenen Produkte für eine technischen Nutzung ungeeignet erschienen.

Später wurde gefunden, daß durch Zusatz verschiedener Stabilisatoren, wie z.B. Gallussäurepropylester, (EP-B 0 047 929), Phenylpropionsäureestern Thioethern oder disubstituiertem Phenylendiamin (DE-OS 42 446 099), Phosphate oder Phosphonate (WO 83/044415), basische Substanzen (DD 158656, DD 218104, insbesondere Amine US-PS 4290815), ein Abbau von Cellulose beim Auflösen in NMMNO bzw. die Zersetzung von NMMNO selbst weitgehend verhindert werden kann.

Die Herstellung niedrigsubstituierter hochquellender Carboxymethylcellulosen durch Umsetzung von Cellulose mit Monochloressigsäure oder Na-Monochloroacetat im System NMMNO unter Verwendung von Natronlauge als Base wird in der DD-PS 207 380 beansprucht. Nicht erwähnt wird hier, daß das System bei Zugabe der Natronlauge stark zur Koagulation neigt und ungleichmäßig substituierte Produkte erhalten werden. Diese koagulierende Wirkung der Natronlauge wird auch bei den meisten anderen obengenannten nichtwäßrigen Celluloselösungsmitteln beobachtet, was einen entscheidenden Nachteil dieser bekannten sogenannten homogen Veretherungsverfahren darstellt. Auch die Verwendung von pulverisiertem Ätznatron (US-PS 4 278 790), Na-Alkoholat und NaH (A. Isogai, A. Ishizu, J. Nakano: J. Appl. Polymer Sci. 29(1984) S. 2097-2109) als Katalysator im System Lithiumchlorid/Dimethylacetamid brachte nicht den gewünschten Erfolg und führte zu Heterogenitäten bei der Umsetzung zu teilsubstituierten Derivaten.Von Seneker und Glass (Polymeric materials science and engineering 52(1985) S. 39-43) wurde die katalytische Wirkung von NMMNO bei der Hydroxyalkylierung von Mannan als Modellsubstanz untersucht und für Cellulose eine bevorzugte Substitution an der C-6 OH-Gruppe angenommen.

Ausgehend von den beschriebenen Nachteilen der bekannten Verfahren zur Veretherung von Cellulose war es Ziel der vorliegenden Erfindung, ein Verfahren zur Herstellung von Celluloseethern unter homogenen Reaktionsbedingungen und unter Verwendung von NMMNO als Lösungsmittel bzw. Reaktionsmedium zu erarbeiten, das die wirtschaftliche Herstellung von Celluloseethern in diesem System ermöglicht und gleichzeitig Produkte mit neuartigen Eigenschaften liefert. Insbesondere sollen Produkte mit einem spezifischen Substitutionsmuster, beispielsweise einer weitgehend gleichmäßigen regioselektiven Substitution der verschiedenen OH-Gruppen des Anhydroglucoseringes der Cellulose, erzeugt werden.

Erfindungsgemäß wird vorgeschlagen, die Cellulose zunächst in NMMNO unter Zusatz geeigneter Stabilisatoren zu lösen und die Veretherungsreaktion in Gegenwart eines Festphasenkatalysators durchzuführen. Die Herstellung der Cellulose-Lösungen erfolgt dabei bevorzugt in bekannter Weise (US-PS 4145532, US-PS 4196282, EP 452610, WO 95/11261) durch Auflösen der Cellulose in einer Schmelze von NMMNO bei Temperaturen von 85 bis 115°C. Üblicherweise wird das Cellulosematerial bei Raumtemperatur in eine wäßrige Lösung von NMMNO eingerührt und unter gleichzeitigem Abdestillieren des Wassers im Vakuum auf etwa 85 bis 115°C erhitzt. Die Cellulosekonzentration beträgt je nach Polymerisationsgrad der eingesetzten Cellulose zweckmäßigerweise 2 bis 20 %, vorzugsweise 3 bis 15 %.

Vorteilhafterweise werden der Cellulosesuspension hierbei Stabilisatoren zugesetzt, die sowohl einen Abbau der Cellulose als auch des NMMNO unterdrücken oder verhindern sollen. Ein geeigneter Stabilisator ist beispielsweise Gallussäurepropylester, wobei die Stabilisatormenge vorzugsweise 1 Masse-%, bezogen auf die Cellulosemenge, beträgt. Sobald ein Wassergehalt erreicht ist, der etwa dem NMMNO (13,3% Wasser) entspricht, geht die Cellulose in Lösung. Die gelöste Cellulose kann dann direkt oder vorzugsweise nach Verdünnen mit einem geeigneten dipolar aprotischen organischen Lösungsmittel, wie beispielsweise Dimethylsulfoxid (DMSO) oder N-Methylpyrrolidon (NMP) oder einem protischen Medium wie einem Alkohol z.B. n- oder iso-Propanol, n- oder iso-Butanol verethert werden.

Als Veretherungsmittel haben sich für das erfindungsgemäße Verfahren vor allem Epoxy- oder Vinylgruppen enthaltende Veretherungsmittel, wie z. B. Ethylenoxid, Propylenoxid, Epoxypropanol oder Acrylnitril als geeignet erwiesen, wobei auch Vinylethylketon oder Vinylsulfonsäure eingesetzt werden können. Das Verfahren ist jedoch auch auf Veretherungen mit Alkylhalogeniden, wie z. B. Monochloressigsäure, Monochloroacetat, Methylchlorid, Ethylchlorid oder Benzylchlorid anwendbar. Entscheidend für das erfindungsgemäße Verfahren ist die Initiierung bzw. Katalyse der Umsetzung mit einem Festphasenkatalysator. Dieser wird mit der Celluloselösung vor, und/oder während und/oder nach der Zugabe des Veretherungsmittels in Kontakt gebracht und nach der Umsetzung durch Filtration oder andere bekannte Trennverfahren wieder abgetrennt. Durch diese Art der Katalyse wird der Lösungszustand der Cellulose im NMMNO nicht beeinträchtigt und die Reaktion verläuft über den gesamten Reaktionszeitraum in homogener Polymerphase. Als Festphasenkatalysator haben sich im System unlösliche basische Substanzen, vor allem stark basische Ionenaustauscherharze z.B. auf Polystyrolbasis, bewährt, die vorzugsweise in Kugelform mit Teilchengrößen von 0,2 bis 3 mm zum Einsatz kommen und quartäre Ammoniumgruppen tragen. Allerdings ist das vorgeschlagene Verfahren nicht auf diese Gruppe von Festphasenkatalysatoren begrenzt. Vor der Umsetzung werden die Ionenaustauscher in bekannter Weise durch Behandlung mit Natronlauge aktiviert. Die erforderlichen Katalysatormengen betragen 0,01 bis 1 Mol, vorzugsweise 0,05 bis 0,5 Mol je Mol Veretherungsmittel. Je nach Reaktionstyp kann es sich jedoch auch als notwendig erweisen, den Katalysator in äquimolaren Mengen, bezogen auf das Veretherungsmittel, einzusetzen. Die Reaktionsbedingungen werden auf das Veretherungsmittel und den angestrebten Substitutionsgrad zugeschnitten. Die Reaktionstemperaturen können zwischen Raumtemperatur und 120 °C betragen. Als vorteilhaft haben sich Umsetzungen bei 30 bis 100 °C erwiesen, wobei die erforderlichen Reaktionszeiten 5 min bis etwa 24 h betragen.

Nach der Umsetzung erfolgt die Isolierung und Reinigung der Celluloseether durch Abtrennen des Festphasenkatalysators und Ausfällung des Celluloseethers mit geeigneten Fällungsmitteln, wie beispielsweise Ethanol, Propanol, Aceton oder deren Mischungen, die vorteilhafterweise dann auch zum Auswaschen der Nebenprodukte verwendet werden.

In einer speziellen Ausführungsform des Verfahrens wird der Festphasenkatalysator stationär in einem Rohrreaktor, z. B. auf einem Siebboden oder mehreren Siebböden, angeordnet und die mit dem Veretherungsmittel versetzte Celluloselösung bei erhöhter Temperatur einmal oder mehrfach durch die Katalysatorschicht gepumpt.

Dabei kann das Veretherungsreagenz auch kontinuierlich der Celluloselösung zugesetzt werden.

Die Kontaktzeiten betragen bei Reaktionstemperaturen von 30 bis 80 °C je nach Veretherungsmittel und angestrebtem Substitutionsgrad 5 min bis 24 h, vorzugsweise 10 min bis 6h. Die Isolierung und Reinigung der resultierenden Celluloseether aus der vom Festphasenkatalysator abgetrennten Polymerlösung erfolgt nach einem Fällungsschritt in analoger Weise wie beim Batch-Verfahren.

Obwohl die Anwendung unlöslicher Ionenaustauscher für katalytische Zwecke aus dem Bereich der organischen Chemie niedermolekularer Verbindungen und auch für eine katalytische Spaltung hochmolekularer Verbindungen gut bekannt ist, war es keineswegs naheliegend, homogene Veretherungen von Cellulose in extrem hochviskoser Lösung mit Hilfe basischer Ionenaustauscher zu katalysieren.

Die Vorteile des erfindungsgemäßen Verfahrens bestehen vor allem darin, daß
1) unter Verwendung von NMMNO als Reaktionsmedium, gegebenenfalls in Kombination mit geeigneten organischen Verdünnungsmitteln, auch hochmolekulare Cellulosetypen in hoher Konzentration ohne Zusatz koagulierend wirkender Basen homogen verethert werden können,
2) keine oder geringere Mengen an Fremdsalzen im Vergleich zu kommerziellen Veretherungsverfahren anfallen,
3) der Kettenlängenabbau der Cellulose bei der Auflösung im System und die Zersetzung des NMMNO durch Einsatz geeigneter Stabilisatoren und durch Vermeidung oder erhebliche Reduzierung des Zusatzes üblicher Basen, wie z.B. NaOH oder quartäre Ammoniumbasen, bei der Veretherungsreaktion vermindert werden kann,
4) vollständig lösliche hochviskose Derivate bereits bei niederen DS-Werten gewonnen werden können,
5) im Vergleich zu kommerziellen Celluloseethern neuartige Produkte hinsichtlich Ionenverträglichkeit oder Temperaturstabilität wäßriger Lösungen herstellbar sind,
6) einerseits eine homogene Verteilung der Substituenten in einem breiten DS-Bereich entlang und zwischen den Polymerketten und andererseits eine regioselektive Einführung funktioneller Gruppen in bestimmten Positionen der Anhydroglucoseeinheit erfolgt,

Die erfindungsgemäße homogene Umsetzung von Cellulose in NMMNO in Gegenwart geeigneter Festphasenkatalysatoren wird in den folgenden Beispielen näher erläutert.

Als Celluloseausgangsmaterial diente beispielhaft ein Holzzellstoff, Typ Ultraether F mit einer GVZ_{Cuen} = 1215, jedoch können auch Cellulosen wie z.B. Baumwolle, Baumwoll-Linters oder Zellstoffe unterschiedlichster Polymerisationsgrade eingesetzt werden.

### Ausführungsbeispiele

### Beispiel 1

Herstellung von Hydroxypropylcellulose

Eine Celluloseschmelzlösung von 4,6g Zellstoff (GVZ_{Cuen} = 1215) in 96 g N-Methylmorpholin-N-oxid-Monohydrat (NMMNO). Die Abkürzung NMMNO bezeichnet immer das Monohydrat des M-Methylmorpholin-N-oxides. (0,046 g Gallussäurepropylester als Stabilisator) wird bei 85°C unter Rühren mit 20 ml Isopropanol verdünnt und auf 75°C temperiert. Anschließend wird eine zuvor bereitete Suspension von 7,5 g Trockensubstanz enthaltendem perlformigen Anionenaustauscher (Polystyrolbasis mit quartären Ammoniumgruppen) in 30 g NMMNO/8 ml Isopropanol hinzugegeben und 15 min gerührt. Über einen Tropftrichter werden dann 20 ml Propylenoxid der Celluloselösung innerhalb von 45 min bei 75°C unter intensivem Rühren zugetropft und 1 h weitergerührt. Nach Abtrennung des Festphasenkatalysators wird die Hydroxypropylcellulose durch Eingießen der Polymerlösung in das dreifache Volumen einer Aceton/Ethanol-Mischung 75 : 25 ausgefällt, mit Ethanol gewaschen und getrocknet.

Die vollständig wasserlösliche Hydroxypropylcellulose wies nach Aufschluß mit Trifluoressigsäure und hochauflösender ¹³C-NMR-Analyse einen MS = 0,93; DS = 0,63 (MS/DS-Verhältnis = 1,47) mit einer Substituentenverteilung von C₂ = 0,07, C₃ = 0,49 und C₆ = 0,07 auf. Die Lösungsviskosität (Haake Rotationsviskosimeter) einer 2 %igen wäßrigen Lösung bei 20°C und einem Schergefälle von D = 2,55 s⁻¹ betrug η =14 000 mPa.s.

### Beispiel 2

Eine Lösung von 4,6 g Zellstoff in 96 g NMMNO wird bei 100°C unter Rühren mit 30 ml DMSO verdünnt und auf 85°C temperiert. Anschließend wird eine zuvor bereitete Suspension von 6 g Trockensubstanz enthaltendem perlförmigen Anionenaustauscher (Polystyrolbasis mit quartären Ammoniumgruppen) in 30 ml DMSO zugesetzt und 15 min gerührt. Dann werden 10 ml Propylenoxid in die farblose Celluloselösung innerhalb von 1 h eingedampft und 3 h intensiv weitergerührt. Der Festphasenkatalysator wird von der bernsteinfarbenen Hydroxypropylcelluloselösung durch Filtration abgetrennt, das Derivat durch Eingießen in das dreifache Volumen einer Aceton/Ethanol-Mischung 75 : 25 ausgefällt, mit Ethanol gewaschen und getrocknet.

Die vollständig wasserlösliche Hydroxypropylcellulose wies nach Aufschluß mit Trifluoressigsäure und hochauflösender ¹³C-NMR-Analyse einen MS = 0,49, DS = 0,35 (MS/DS-Verhältnis = 1,4) mit einer Substituentenverteilung von C₂ = 0,05, C₃ = 0,20 und C₆ = 0,05 und eine Lösungsviskosität in 2 %iger wäßriger Lösung bei 20°C von η = 6300 mPa.s bei einem Schergefälle von D = 2,55 s⁻¹ auf.

### Beispiel 3

Es wird wie in Beispiel 2 gearbeitet, jedoch wird die Reaktion bei 75°C durchgeführt und 20 ml Propylenoxid innerhalb von 1,5 h über einen Tropftrichter zudosiert.

Die vollständig wasserlösliche Hydroxypropylcellulose wies einen MS = 1,43, DS = 1,01 (MS/DS-Verhältnis = 1,4) mit einer Substituentenverteilung von C₂ = 0,01, C₃ = 0,92 und C₆ = 0,09 und eine Lösungsviskosität in 2 %iger wäßriger Lösung bei 20 °C von η = 2150 mPa.s bei einem Schergefälle von D = 2,55 s⁻¹ auf.

Eine wäßrige Lösung dieses Hydroxypropylcellulose koaguliert im Gegensatz zu kommerziellen Produkten beim Erwärmen auf 100°C nicht.

### Beispiel 4

Es wird wie in Beispiel 3 bei einer Reaktionstemperatur von 75°C, jedoch anstelle von DMSO mit N-Methylpyrrolidon als Verdünnungsmittel gearbeitet und 20 ml Propylenoxid innerhalb von 1,5 h über einen Tropftrichter zudosiert.

Die vollständig wasserlösliche Hydroxypropylcellulose wies einen MS = 0,48; DS = 0,33 (MS/DS-Verhältnis = 1,45) mit einer Substituentenverteilung von C₂ = 0,03, C₃ = 0,30 ohne C₆-Substitution und eine Lösungsviskosität in 2 %iger wäßriger Lösung bei 20°C von η = 11 300 mPa.s bei einem Schergefälle von D = 2,55 s⁻¹ auf.

### Beispiel 5

### Herstellung von Hydroxyethycellulose

Eine Celluloseschmelzlösung von 4,6 g Zellstoff in 96 g NMMNO wird bei 100°C unter Rühren mit 30 ml DMSO verdünnt und auf 65°C temperiert. Anschließend wurden 7,5 g Trockensubstanz enthaltender perlförmiger Anionenaustauscher suspendiert in 30 ml DMSO zugegeben und 15 min gerührt. Aus einer Druckflasche werden dann 12,5 g Ethylenoxid der Celluloselösung innerhalb von 30 min bei 65°C zudosiert. Die bereits nach 10 min Reaktionszeit wasserlösliche Hydroxyethylcellulose wurde nach 1 h Rühren isoliert, indem der Festphasenkatalysator durch Zentrifugation über eine Fritte von der Polymerlösung abgetrennt, das Derivat durch Eingießen in das dreifache Volumen einer Aceton/Ethanol-Mischung 75 : 25 ausgefällt, mit Ethanol gewaschen und getrocknet wurde.

Die vollständig wasserlösliche Hydroxyethylcellulose wies einen DS = 0,95 mit C₂ = 0,20, C₃= 0,75 und eine Lösungsviskosität in 2 %iger wäßriger Lösung bei 20 °C von η = 2500 mPa.s bei einem Schergefälle von D = 2,55 s⁻¹ auf.

### Beispiel 6

Es wird wie in Beispiel 5 bei einer Reaktionstemperatur von 65°C, jedoch anstelle von DMSO mit N-Methylpyrrolidon als Verdünnungsmittel gearbeitet.

Die vollständig wasserlösliche Hydroxyethylcellulose wies einen DS = 0,7 mit C₂ = 0,10, C₃ = 0,57 und eine Lösungsviskosität in 2 %iger wäßriger Lösung bei 20°C von η = 3200 mPa.s bei einem Schergefälle von D = 2,55 s⁻¹ auf.

### Beispiel 7

### Herstellung von Cyanethylcellulose

Eine Lösung von 4,6 g Zellstoff in 96 g NMMNO wird bei 100°C unter Rühren mit 30 ml N-Methylpyrrolidon verdünnt und auf 65°C temperiert. Anschließend wird eine zuvor bereitete Suspension von 7,5 g Trockensubstanz enthaltendem perlförmigen Anionenaustauscher in 30 ml NMP zugegeben und 15 min gerührt. Zur Cyanethylierung werden 15 ml Acrylnitril innerhalb von 3 min zudosiert. Nach 15 min Reaktionszeit bei 65 °C wurde der Festphasenkatalysator von der Polymerlösung durch Filtration abgetrennt, das Derivat durch Eingießen in das dreifache Volumen einer Aceton/Ethanol-Mischung 75 : 25 ausgefällt, mit Ethanol gewaschen und getrocknet.

Die vollständig wasserlösliche Cyanethylcellulose wies einen DS an Cyanethylgruppen von 0,6 mit einer Substituentenverteilung von C₂ = 0,2, C₃ = 0,32 und eine Lösungsviskosität in 2 %iger wäßriger Lösung bei 20 °C von η = 5750 mPa.s bei einem Schergefälle von D = 2,55 s⁻¹ auf.

### Beispiel 8

### Herstellung von Carboxymethylcellulose

Eine Celluloselösung von 6 g Zellstoff in 125 g NMMNO-Schmelze (0,06 g Gallussäurepropylester als Stabilisator) wurden bei 105°C mit 40 ml DMSO verdünnt. Zur Carboxymethylierung wurden Monochloressigsäure (MCE) als Reagenz und Trimethylbenzylammoniumhydroxid (Triton B) als Cokatalysator eingesetzt. Nach Temperierung auf 65°C wurden unter intensivem Rühren 1,7 g MCE gelöst in 10 ml DMSO innerhalb von 3 min zugegeben, dann 6,15 g Triton B in 20 ml DMSO (15,4 ml 40 %iges wäßriges Triton B in 20 ml DMSO gelöst und 4 ml Wasser abdestilliert) in 30 min zugetropft und die Lösung 1 h bei 65 °C gerührt. Anschließend wurden 3,5 g MCE als Lösung in 20 ml DMSO innerhalb von 10 min, 12,3 g Triton B gelöst in 40 ml DMSO (31 ml 40 %iges wäßriges Triton B in 40 ml DMSO gelöst und 8 ml Wasser abdestilliert) innerhalb von 10 min und danach eine zuvor bereitete Suspension von 7,5 g Trockensubstanz enthaltendem perlförmigen Anionenaustauscher in 30 ml DMSO unter intensivem Rühren zudosiert. Nach zweistündigem Rühren erfolgte nach Abtrennung des Festphasenkatalysators die Isolierung der Carboxymethylcellulose durch Fällung im 3fachen Volumen Ethanol, dreimalige Wäsche mit Ethanol, Behandlung mit 0,5 % NaOH und 10 % Wasser enthaltendem Ethanol zur quantitativen Überführung in Na-CMC, Wäsche mit entsäuerten Methanol bis zur Cl⁻-Freiheit des Filtrats und anschließende Trocknung. Die vollständig wasserlösliche Na-CMC weist nach Aufschluß mit Trifluoressigsäure und hochauflösender ¹³C-NMR-Analyse einen DS = 0,39 mit einer Substituentenverteilung von C₂ = 0,12, C₃ = 0,26 und C₆ = 0,01 auf und hat eine Lösungsviskosität in 2 %iger wäßriger Lösung bei 20°C von η = 41 500 mPa.s bei einem Schergefälle von D = 2,55 s⁻¹.

### Beispiel 9

### Herstellung von Carboxymethylhydroxypropylcellulose

Eine Celluloselösung von 50 g Zellstoff in 1 600 g NMMNO-Schmelze (0,5 g Gallussäurepropylester als Stabilisator) wurden bei 105°C mit 500 ml DMSO verdünnt. Nach Temperierung auf 65°C wurden unter Rühren 14,6 g MCE gelöst in 53 g DMSO innerhalb von 20 Minuten zugegeben, dann 51,7 g Triton B in 130 g DMSO in 1 Stunde zugetropft und die Lösung 1 Stunde bei 65°C gerührt. Anschließend wurden 29,2 g MCE als Lösung in 100 g DMSO innerhalb von 15 Minuten und 129 g Triton B gelöst in 470 g DMSO innerhalb von 45 Minuten zudosiert und 2 Stunden gerührt. (Eine dem Ansatz entnommene CMC-Probe wies einen DS_{CMC} = 0,45 mit einer Substituentenverteilung von C₂ = 0,10, C₃ = 0,35 ohne C₆-Substitution auf.) Zur Hydroxypropylierung wurden dem Reaktionsansatz eine zuvor bereitete Suspension von 10 g Trockensubstanz enthaltendem perlförmigen Anionenaustauscher in 40 g DMSO und anschließend 70 ml Propylenoxid innerhalb von 1,5 Stunden unter intensivem Rühren zudosiert. Nach zweistündigem Rühren erfolgte nach Abtrennung des Festphasenkatalysators die Isolierung des Carboxymethylhydroxypropylethers der Cellulose durch Fällung im 3-fachen Volumen Ethanol, dreimalige Wäsche mit Ethanol, Behandlung mit 0,5 % NaOH und 10 % Wasser enthaltendem Ethanol zur quantitativen Überführung der Carboxylmethylgruppen in Na-Salzform, Wäsche mit entsäuerten Methanol bis zur Cl-Freiheit des Filtrats und anschließende Trocknung. Die vollständig wasserlösliche Carboxymethylhydroxypropylcellulose weist nach Aufschluß mit Trifluoressigsäure und hochauflösender ¹³C-NMR-Analyse einen MS_{PO} = 0,82, DS_{PO} = 0,58 mit einem C₆-Substitutionsanteil von ca. 0,1 auf und hat eine Lösungsviskosität in 2 %iger wäßriger Lösung bei 20°C von η = 15 500 mPa.s bei einem Schergefälle von D = 2,55 s⁻¹.

## Patentansprüche

1. Celluloseether mit spezifischem Substitutionsmuster, dadurch gekennzeichnet, daß sie überwiegend in der C3-Position der Anhydroglucoseeinheit der Cellulose substituiert sind.

2. Celluloseether nach Anspruch 1, dadurch gekennzeichnet, daß der Partial-DS in der C3-Position bezogen auf den Gesamt-DS ≥ 60 % ist.

3. Celluloseether nach Anspruch 1 oder 2, dadurch gekennzeichnet, daß der Partial-DS in der C6-Position bezogen auf den Gesamt-DS ≤ 15 % ist.

4. Verfahren zur Herstellung von Celluloseether gemäß Anspruch 1 bis 3, durch Umsetzung von in N-Methylmorpholin-N-oxid-Monohydrat (NMMNO) und gegebenenfalls weiteren inerten organischen Lösungsmitteln gelöster Cellulose mit Alkylierungsreagenzien, dadurch gekennzeichnet, daß die Umsetzung in Gegenwart eines unlöslichen Festphasenkatalysators, von Stabilisatoren sowie gegebenenfalls zusätzlichen löslichen Cokatalysatoren erfolgt.

5. Verfahren nach Anspruch 4, dadurch gekennzeichnet, daß als Festphasenkatalysator eine im Reaktionssystem unlösliche basische Verbindung eingesetzt wird.

6. Verfahren nach den Ansprüchen 4 und 5, dadurch gekennzeichnet, daß der Festphasenkatalysator quartäre Ammoniumgruppen besitzt.

7. Verfahren nach den Ansprüchen 4 bis 6, dadurch gekennzeichnet, daß als Festphasenkatalysator ein im Reaktionssystem unlöslicher Anionenaustauscher verwendet wird.

8. Verfahren nach den Ansprüchen 4 bis 7, dadurch gekennzeichnet, daß der Festphasenkatalysator ein quartäre Ammoniumgruppen enthaltender unlöslicher, Anionenaustauscher auf Polystyrolbasis ist.

9. Verfahren nach den Ansprüchen 4 bis 8, dadurch gekennzeichnet, daß die Veretherungsreaktion in Gegenwart eines im Reaktionsystem löslichen Cokatalysators durchgeführt wird.

10. Verfahren nach den Ansprüchen 4 bis 9, dadurch gekennzeichnet, daß der Cokatalysator eine im System lösliche quartäre Ammoniumbase, vorzugsweise Trimethylbenzylammoniumhydroxid ist.

11. Verfahren nach den Ansprüchen 4 bis 10, dadurch gekennzeichnet, daß der Cokatalysator ein löslicher Phasentransferkatalysator, vorzugsweise ein im System lösliches quärtäres Ammoniumsalz ist, insbesondere Trimethylbenzylammoniumchlorid oder Tetrabutylammoniumchlorid.

12. Verfahren nach den Ansprüchen 4 bis 11, dadurch gekennzeichnet, daß als Veretherungsmittel Epoxyverbindungen, vorzugsweise Ethylenoxid, Propylenoxid, Epoxypropanol eingesetzt werden.

13. Verfahren nach den Ansprüchen 4 bis 12, dadurch gekennzeichnet, daß als Veretherungsmittel Vinylverbindungen, vorzugsweise Acrylnitril, Methylvinylketon, Vinylsulfonsäure, deren Salze oder Ester eingesetzt werden.

14. Verfahren nach den Ansprüchen 4 bis 13, dadurch gekennzeichnet, daß als Veretherungsmittel Halogenalkylderivate, vorzugsweise Monochloressigsäure, Na-Monochloracetat, Methylchlorid, Ethylchlorid, Benzylchlorid verwendet werden.

15. Verfahren nach den Ansprüchen 12 bis 14, dadurch gekennzeichnet, daß die Veretherung mit mehreren Veretherungsmitteln gleichzeitig oder nacheinander erfolgt.

16. Verfahren nach den Ansprüchen 4 bis 15, dadurch gekennzeichnet, daß als organische Verdünnungsmittel dipolar aprotische Lösungsmittel, vorzugsweise Dimethylsulfoxid oder N-Methylpyrrolidon, verwendet werden.

17. Verfahren nach den Ansprüchen 4 bis 15, dadurch gekennzeichnet, daß als organische Verdünnungsmittel protische Medien in nicht koagulierend wirkenden Konzentrationen, vorzugsweise n- oder iso-Propanol, n-, iso- oder tert.-Butanol, verwendet werden.

18. Verfahren nach den Ansprüchen 4 bis 17, dadurch gekennzeichnet, daß die Dosierung der Reagenzien über die Dampfphase, in flüssiger Form oder gelöst in einem oder mehreren der im System enthaltenen Komponenten erfolgt.

19. Verfahren nach den Ansprüchen 4 bis 18, dadurch gekennzeichnet, daß der Festphasenkatalysator in einer systemverträglichen Suspension, vorzugsweise suspendiert in NMMNO, organischem Verdünnungsmittel oder Mischungen davon eingesetzt wird

20. Verfahren nach den Ansprüchen 4 bis 19, dadurch gekennzeichnet, daß der Festphasenkatalysator vor, und/oder während und/oder nach der Reagenzdosierung mit dem Reaktionssystem in Kontakt gebracht wird.

21. Verfahren nach den Ansprüchen 4 bis 20, dadurch gekennzeichnet, daß die Umsetzung in in einem kontinuierlichen Verfahren, vorzugsweise in einem Rohrreaktor, einer Rührkesselkaskade oder einem Schlaufenreaktor durchgeführt wird.

22. Verfahren nach den Ansprüchen 4 bis 21, dadurch gekennzeichnet, daß das Reaktionssystem den Festphasenkatalysator durchströmt.

23. Verfahren nach Anspruch 22, dadurch gekennzeichnet, daß der Festphasenkatalysator auf einem oder mehreren Zwischenböden aufgebracht ist.

24. Verfahren nach den Ansprüchen 4 bis 23, dadurch gekennzeichnet, daß vor und/oder während des Kontaktes des Reaktionssystems mit dem Festphasenkatalysator ein Cokatalysator zudosiert wird.

25. Verfahren nach den Ansprüchen 4 bis 24, dadurch gekennzeichnet, daß die Veretherungsreaktion bei Raumtemperatur bis 120°C, vorzugsweise bei 30 bis 100 °C, durchgeführt wird.

26. Verfahren nach den Ansprüchen 4 bis 25, dadurch gekennzeichnet, daß die Reaktionszeiten 5 min bis 24 Stunden, vorzugsweise 10 min bis 6 h, betragen.

27. Verfahren nach den Ansprüchen 4 bis 26, dadurch gekennzeichnet, daß der Festphasenkatalysator mit einer Base unter Verwendung von zur Auflösung von Cellulose verwendeten Lösungsmittelkomponenten reaktiviert wird.

28. Verfahren nach den Ansprüch 4 bis 27, dadurch gekennzeichnet, daß der Festphasenkatalysator mit NaOH, vorzugsweise gelöst in NMMNO/Wasser/organisches Lösungsmittel reaktiviert wird.

## Claims

1. Cellulose ethers with a specific substitution pattern, characterised in that they are substituted predominantly in the C3 position of the anhydroglucose unit of the cellulose.

2. Cellulose ethers according to claim 1, characterised in that the partial DS in the C3 position based on the total DS is ≥60%.

3. Cellulose ethers according to claim 1 or 2, characterised in that the partial DS in the C6 position based on the total DS is ≤ 15%.

4. Process for the preparation of cellulose ether according to claim 1 to 3 by reaction of cellulose dissolved in N-methylmorpholine-N-oxide monohydrate (NMMNO) and optionally other inert organic solvents with alkylation reagents, characterised in that the reaction takes place in the presence of an insoluble solid phase catalyst, stabilisers and optionally additional soluble co-catalysts.

5. Process according to claim 4, characterised in that the solid phase catalyst used is a basic compound which is insoluble in the reaction system.

6. Process according to claims 4 and 5, characterised in that the solid phase catalyst has quaternary ammonium groups.

7. Process according to claims 4 to 6, characterised in that the solid phase catalyst used is an anion exchanger which is insoluble in the reaction system.

8. Process according to claims 4 to 7, characterised in that the solid phase catalyst is an insoluble polystyrene-based anion exchanger containing quaternary ammonium groups.

9. Process according to claims 4 to 8, characterised in that the etherification reaction is carried out in the presence of a co-catalyst which is soluble in the reaction system.

10. Process according to claims 4 to 9, characterised in that the co-catalyst is a quaternary ammonium base which is soluble in the system, preferably trimethylbenzylammonium hydroxide.

11. Process according to claims 4 to 10, characterised in that the co-catalyst is a soluble phase transfer catalyst, preferably a quaternary ammonium salt which is soluble in the system, particularly trimethylbenzylammonium chloride or tetrabutylammonium chloride.

12. Process according to claims 4 to 11, characterised in that etherification agents used are epoxy compounds, preferably ethylene oxide, propylene oxide, epoxypropanol.

13. Process according to claims 4 to 12, characterised in that etherification agents used are vinyl compounds, preferably acrylonitrile, methyl vinyl ketone, vinylsulfonic acid, the salts or esters thereof.

14. Process according to claims 4 to 13, characterised in that etherification agents used are halogenalkyl derivatives, preferably monochloroacetic acid, Na-monochloroacetate, methylchloride, ethylchloride, benzylchloride.

15. Process according to claims 12 to 14, characterised in that etherification is carried out with several etherification agents simultaneously or successively.

16. Process according to claims 4 to 15, characterised in that organic diluents used are dipolar aprotic solvents, preferably dimethylsulfoxide or N-methylpyrrolidone.

17. Process according to claims 4 to 15, characterised in that organic diluents used are protic media in concentrations without a coagulating effect, preferably n- or iso-propanol, n-, iso- or tert.-butanol.

18. Process according to claims 4 to 17, characterised in that the reagents are metered by way of the vapour phase, in the liquid form or dissolved in one or more of the components contained in the system.

19. Process according to claims 4 to 18, characterised in that the solid phase catalyst is used in a suspension compatible with the system, preferably in suspension in NMMNO, organic diluent or mixtures thereof.

20. Process according to claims 4 to 19, characterised in that the solid phase catalyst is brought into contact with the reaction system before, and/or during and/or after the reagent metering.

21. Process according to claims 4 to 20, characterised in that the reaction is carried out in a continuous process, preferably in a tubular reactor, a cascade of agitated reactors or a loop reactor.

22. Process according to claims 4 to 21, characterised in that the reaction system flows through the solid phase catalyst.

23. Process according to claim 22, characterised in that the solid phase catalyst is applied to one or more intermediate plates.

24. Process according to claims 4 to 23, characterised in that a co-catalyst is added before and/or during the contact of the reaction system with the solid phase catalyst.

25. Process according to claims 4 to 24, characterised in that the etherification reaction is carried out at room temperature to 120 °C, preferably from 30 to 100°C.

26. Process according to claims 4 to 25, characterised in that the reaction times are from 5 min to 24 hours, preferably from 10 min to 6 h.

27. Process according to claims 4 to 26, characterised in that the solid phase catalyst is reactivated with a base using solvent components used to dissolve cellulose.

28. Process according to claims 4 to 27, characterised in that the solid phase catalyst is reactivated with NaOH, preferably dissolved in NMMNO/water/organic solvent.

## Revendications

1. Ethers de cellulose possédant un modèle de substitution spécifique, caractérisés en ce qu'ils sont substitués principalement en position C3 de l'unité d'anhydroglucose de la cellulose.

2. Ethers de cellulose selon la revendication 1, caractérisés en ce que le degré de substitution partielle en position C3, rapporté au degré de substitution totale, est ≥ 60 %.

3. Ethers de cellulose selon la revendication 1 ou 2, caractérisés en ce que le degré de substitution partielle en position C6, rapporté au degré de substitution totale, est ≤ 15 %.

4. Procédé pour la préparation d'éthers de cellulose selon les revendications 1 à 3, par mise en réaction de cellulose dissoute dans du monohydrate de N-oxyde de N-méthylmorpholine (NMMNO) et le cas échéant dans d'autres solvants organiques inertes avec des réactifs d'alkylation, caractérisé en ce que la mise en réaction a lieu en présence d'un catalyseur insoluble en phase solide, de stabilisateurs et le cas échéant de cocatalyseurs solubles supplémentaires.

5. Procédé selon la revendication 4, caractérisé en ce qu'on met en oeuvre, à titre de catalyseur en phase solide, un composé basique insoluble dans le système réactionnel.

6. Procédé selon les revendications 4 et 5, caractérisé en ce que le catalyseur en phase solide contient des groupes d'ammonium quaternaires.

7. Procédé selon les revendications 4 à 6, caractérisé en ce qu'on utilise à titre de catalyseur en phase solide, un échangeur d'anions insoluble dans le système réactionnel.

8. Procédé selon les revendications-4 à 7, caractérisé en ce que le catalyseur en phase solide est un échangeur d'anions insoluble à base de polystyrène contenant des groupes d'ammonium quaternaires.

9. Procédé selon les revendications 4 à 8, caractérisé en ce qu'on effectue la réaction d'éthérification en présence d'un cocatalyseur soluble dans le système réactionnel.

10. Procédé selon les revendications 4 à 9, caractérisé en ce que le cocatalyseur est une base d'ammonium quaternaire soluble dans le système, de préférence l'hydroxyde de triméthylbenzylammonium.

11. Procédé selon les revendications 4 à 10, caractérisé en ce que le cocatalyseur est un catalyseur soluble de transfert de phase, de préférence un sel d'ammonium quaternaire soluble dans le système, en particulier le chlorure de triméthylbenzylammonium ou le chlorure de tétrabutylammonium.

12. Procédé selon les revendications 4 à 11, caractérisé en ce qu'on met en oeuvre, à titre d'agent d'éthérification des composés époxy, de préférence l'oxyde d'éthylène, l'oxyde de propylène, l'époxypropanol.

13. Procédé selon les revendications 4 à 12, caractérisé en ce qu'on met en oeuvre à titre d'agent d'éthérification des composés vinyliques, de préférence l'acrylonitrile, la méthylvinylcétone, leurs sels ou leurs esters.

14. Procédé selon les revendications 4 à 13, caractérisé en ce qu'on utilise à titre d'agent d'éthérification des dérivés halogénalkyle de préférence de l'acide monochloracétique, le monochloracétate de sodium, le chlorure de méthyle, le chlorure d'éthyle, le chlorure de benzyle.

15. Procédé selon les revendications 12 à 14, caractérisé en ce qu'on effectue l'éthérification de manière simultanée ou successive avec plusieurs agents d'éthérification.

16. Procédé selon les revendications 4 à 15, caractérisé en ce qu'on utilise à titre de diluant organique, des solvants aprotiques dipolaires, de préférence le diméthylsulfoxyde ou la N-méthylpyrrolidone.

17. Procédé selon les revendications 4 à 15, caractérisé en ce qu'on utilise à titre de diluant organique, des milieux protiques dans des concentrations qui ne donnent pas lieu à une coagulation, de préférence le n-propanol un ou l'isopropanol, le n-butanol, l'isobutanol ou le tert.-butanol.

18. Procédé selon les revendications 4 à 17, caractérisé ou en ce que le dosage des réactifs a lieu via la phase vapeur, sous forme liquide ou sous forme dissoute dans un ou plusieurs des composants contenus dans le système.

19. Procédé selon les revendications 4 à 18, caractérisé en ce qu'on met en oeuvre le catalyseur en phase solide dans une suspension compatible avec le système, de préférence en suspension dans le NMMNO, dans des diluants organiques ou dans leurs mélanges.

20. Procédé selon les revendications 4 à 19, caractérisé en ce qu'on amène le catalyseur en phase solide avant et/ou pendant et/ou après le dosage des réactifs en contact avec le système réactionnel.

21. Procédé selon les revendications 4 à 20, caractérisé en ce qu'on effectue la mise en réaction dans un procédé en continu, de préférence dans un réacteur tubulaire, dans une cascade de cuves d'agitation ou dans un réacteur en boucle.

22. Procédé selon les revendications 4 à 21, caractérisé en ce que le système réactionnel s'écoule à travers le catalyseur en phase solide.

23. Procédé selon la revendication 22, caractérisé en ce qu'on applique le catalyseur en phase solide sur un ou plusieurs plateaux intermédiaires.

24. Procédé selon les revendications 4 à 23, caractérisé en ce qu'on ajoute de manière dosée un cocatalyseur avant et/ou pendant la mise en contact du système réactionnel avec le catalyseur en phase solide.

25. Procédé selon les revendications 4 à 24, caractérisé en ce qu'on effectue la réaction d'éthérification à une température allant de la température ambiante à 120°C, de préférence à une température de 30 à 100°C.

26. Procédé selon des revendications 4 à 25, caractérisé en ce que les temps de réaction s'élèvent de 5 minutes à 24 heures, de préférence de 10 minutes à 6 heures.

27. Procédé selon les revendications 4 à 26, caractérisé en ce qu'on réactive le catalyseur en phase solide avec une base en utilisant les composants de solvants utilisés pour la dissolution de la cellulose.

28. Procédé selon les revendications 4 à 27, caractérisé en ce qu'on réactive le catalyseur en phase solide avec du NaOH, de préférence dissous dans NMMNO/eau/solvant organique.
